(19) Europäisches Patentamt
European Patent Office
Office européen des brevets

(11) **EP 2 307 935 B1**

(12) **EUROPÄISCHE PATENTSCHRIFT**

(45) Veröffentlichungstag und Bekanntmachung des Hinweises auf die Patenterteilung:
**15.08.2012   Patentblatt 2012/33**

(21) Anmeldenummer: **09768918.6**

(22) Anmeldetag: **15.06.2009**

(51) Int Cl.:
*G05B 19/416* (2006.01)

(86) Internationale Anmeldenummer:
**PCT/EP2009/004294**

(87) Internationale Veröffentlichungsnummer:
**WO 2009/156069 (30.12.2009 Gazette 2009/53)**

(54) **POSITIONSGESTEUERTER MECHANISMUS UND VERFAHREN ZUR STEUERUNG VON IN MEHREREN BEWEGUNGSFREIHEITSGRADEN BEWEGLICHEN MECHANISMEN**

POSITION-CONTROLLED MECHANISM AND METHOD FOR CONTROLLING MECHANISMS HAVING SEVERAL DEGREES OF FREEDOM OF MOVEMENT

MÉCANISME COMMANDÉ EN POSITION ET PROCÉDÉ DE COMMANDE DE MÉCANISMES MOBILES SELON PLUSIEURS DEGRÉS DE LIBERTÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **24.06.2008   DE 102008029657**

(43) Veröffentlichungstag der Anmeldung:
**13.04.2011   Patentblatt 2011/15**

(73) Patentinhaber: **Technische Universität Carolo-Wilhelmina zu Braunschweig
38106 Braunschweig (DE)**

(72) Erfinder: **TORSTEN, Kröger
24805 Hamdorf (DE)**

(74) Vertreter: **Gerstein, Hans Joachim
Gramm, Lins & Partner GbR
Freundallee 13a
30173 Hannover (DE)**

(56) Entgegenhaltungen:
**WO-A-00/73967      WO-A-03/007129
US-A- 4 988 935      US-B1- 6 294 755**

• **TORSTEN KROGER ET AL: "Towards On-Line Trajectory Computation" INTELLIGENT ROBOTS AND SYSTEMS, 2006 IEEE/RSJ INTERNATIONAL CONFERENCE ON, IEEE, PI, 1. Oktober 2006 (2006-10-01), Seiten 736-741, XP031006157 ISBN: 978-1-4244-0258-8 in der Anmeldung erwähnt**

**Beschreibung**

Die Erfindung betrifft ein Verfahren zur Steuerung von in mehreren Bewegungsfreiheitsgraden beweglichen Mechanismen mittels Bewegungstrajektorien in vorgegebenen Bewegungsfreiheitsgraden. Es erfolgt ein wiederholtes Generieren von aktualisierten Bewegungstrajektorien während der Bewegung für aktuelle Zeitpunkte eines Regelintervalles mit:

I) Auswählen und Parametrisieren von Bewegungsprofilen für positionsgesteuerte Bewegungsfreiheitsgrade aus einer vorgegebenen Menge von Bewegungsprofilen, unter dessen Anwendung ein vorgegebener Zielbewegungszustand auf einer Bewegungstrajektorie unter vorgegebenen Randbedingungen erreichbar ist; und
II) Berechnen von Führungswerten für das aktuelle Regelintervall unter Verwendung der ausgewählten und parametrisierten Bewegungsprofile.

Die Erfindung betrifft weiterhin einen positionsgesteuerten Mechanismus, insbesondere Roboter, mit einer Mehrzahl von Aktoren, mit von den Aktoren in positionsgesteuerten Bewegungsfreiheitsgraden antreibbaren Bewegungselementen und mit einer Steuerungseinheit zur Ansteuerung der Aktoren mittels Führungsgrößen.
Die Steuerung von Robotern mit Hilfe von Bewegungstrajektorien ist an sich hinreichend bekannt. Die Bewegungstrajektorien werden als Führungsgrößen genutzt, um ein bestimmtes Koordinatensystem bezüglich des Endeffektors (z.B. ein bestimmtes Werkzeug) oder einen bestimmten Punkt (z.B. eine Werkzeugspitze) von einem vorgegebenen Punkt im drei-(bzw. sechs-) dimensionalen Raum zum nächsten zu bewegen.
Üblicherweise wird die Bewegungstrajektorie vorab bzw. mit einer gewissen Vorlaufzeit geplant. Sobald eine (Teil-) Trajektorie geplant ist, wird sie ausgeführt und kann nicht mehr verändert werden. Der Roboter ist somit nicht mehr in der Lage, auf unvorhersehbare, unplanbare Ereignisse zu reagieren, die beispielsweise von Sensoren detektiert werden.
EP 0 568 416 B1 beschreibt beispielsweise eine numerische Steuervorrichtung zur Berechnung eines kurzen Bahnverlaufes eines Roboters so, dass die Trajektorien von der Geschwindigkeit unabhängig sind.
DE 103 24 517 A1 offenbart ein Steuerverfahren für einen Roboter mit einem Überwachungsbereich. Ein Arbeitsprogramm ermöglicht eine Reaktion des Roboters auf unplanbare Ereignisse, wie das Betreten der Roboterarbeitszelle durch den Menschen, so dass in Abhängigkeit von der Bewegungstrajektorie und einem möglichen Kollisinsort ein Nothalt unterbleibt, wenn trotz Eindringens in die Roboterarbeitszelle keine Kollisionsgefahr vorliegt.
DE 199 14 245 A1 beschreibt eine Roboter-Steuervorrichtung, bei der ein Einhalten von Grenzwerten sichergestellt und ein Fehler bezüglich der Bewegungstrajektorie reduziert wird, indem nach Ermittlung eines Geschwindigkeitsmusters Betriebsparameter berechnet werden und nach Grenzwertkontrolle eines berechneten Drehmomentes ein Zusatzzeitausmaß mit Hilfe eines berechneten Geschwindigkeitsänderungsverhaltens korrigiert wird.
DE 601 29 009 T2 beschreibt ein Verfahren zur Bewegungskorrektur eines Industrieroboters, bei dem ein Bezugsweg mit einem Ausgangsweg verglichen wird und in Abhängigkeit von der hierdurch bestimmten Wegabweichung das Steuerungssystem korrigiert wird.
In ähnlicher Weise beschreiben DE 690 30 592 T2, DE 693 20 670 T2, DE 10 2005 054 575 B3 und DE 10 2006 036 601 A1 Verfahren zur Robotersteuerung mit Hilfe vor Durchführung der Bewegung geplanter Bewegungstrajektorien, die dann unverändert der Regelung des Roboterarms auf der Bewegungstrajektorie zugrunde gelegt werden. Beispielsweise wird in DE 10 2006 036 601 A1 vorgeschlagen, Stützstellen in den Arbeitsraum des Roboters zu legen, die zur Generierung einer auf Splines basierenden Trajektorie genutzt werden. Da diese Stützstellen vorab bekannt sein müssen, um die Splines zu berechnen, können die Bewegeungstrajektorien nur offline vor der Bewegung generiert werden.
Entsprechende Verfahren, bei denen Bewegungstrajektorien vorab (offline) generiert werden, sind auch in M. E. Kahn und B. Roth: The Near-Minimum-Time Control of Open-Loop Articulated Kinematic Chains. ASME Journal of Dynamic Systems, Measurement and Control, 93, Seiten 164 bis 172, September 1971, aus M. Brady: Robot motion: Planing and Control, Kapitel 4, Seiten 221 bis 243 MIT Press 1982,
**[0011]** J. E. Bobrow, S. Dubowsky und J. S. Gibson: Time-Optimal Control of Robotic Manipulators Along Specified Paths, The International Journal of Robotics Research, 4 (3), Seiten 3 bis 17, Fall 1985 sowie
K. J. Kyriakopoulos und G. N. Saridis: MINIMUM JERK PATH GENERATION, in: Proceedings of IEEE International Conference on Robotics and Automation, Seiten 364 bis 369, 1988 offenbart.
S. Macfarlane und E. A. Croft: Jerk-Bounded Manipulator Trajectory Planning: Design for Real-Time Applications, in: IEEE Transactions on Robotics and Automation, 19(1), Seiten 42 bis 52, Februar 2003 offenbart ein Online-Verfahren zur Berechnung glatter Bewegungstrajektorien, bei dem eine Folge von Segmenten einer Trajektorie zur Punkt-zu-Punkt-Bewegung geplant wird. Dabei werden Kontrollpunkte berechnet und durch eine Polynom-Bahnkurve miteinander verbunden.
Ähnliche Verfahren sind auch in

B. Cao, G. I. Dodds und G. W. Irwin: A Practical Approach to Near Time-Optimal Inspection-Task-Sequence Planning for Two Cooperative Industrial Robot Arms, in: The International Journal of Robotics Research, 17(8), Seiten 858 bis 867, August 1998 und in

P. Lambrechts, M. Boerlage, M. Steinbuch: Trajectory Planning and Feedforward Design for High Performance Motion Systems, in: Proceedings of the American Control Conference, Volume 5, Seiten 4.637 bis 4.642, 2004, beschrieben.

Ein Verfahren zur Steuerung zur Bewegung eines Roboters mit allen positionsgesteuerten Bewegungsfreiheitsgraden während der Bewegung durch Online-Berechnung einer Bewegungstrajektorie ist in T. Kröger, A. Tomiczek und F. M. Wahl: Towards On-Line Trajectory Computation, in: IEEE International Conference on Intelligent Robots and Systems, Beijing, China, 2006, Seiten 736 bis 741 beschrieben. Mit dem dort beschriebenen Verfahren ist es möglich, unmittelbar auf unplanbare, unvorhersehbare Sensorereignisse zu reagieren. Das Generieren von ruckbegrenzten, zeitsynchronen und zeitoptimalen Bewegungstrajektorien ist jedoch nicht möglich.

Aufgabe der vorliegenden Erfindung ist es daher, ein verbessertes Verfahren zur Steuerung von in mehreren Bewegungsfreiheitsgraden beweglichen Mechanismen mittels Bewegungstrajektorien in vorgegebenen Bewegungsfreiheitsgraden sowie einen verbesserten positionsgesteuerten Mechanismus, insbesondere Roboter zu schaffen, um während der Bewegung optimale Bewegungstrajektorien zu generieren und damit auf ungeplante Ereignisse reagieren zu können.

Die Aufgabe wird mit dem Verfahren gemäß Anspruch 1 gelöst.

Gemäß der Lehre der vorliegenden Erfindung erfolgt die Auswahl der Bewegungsprofile mit einem sequenziellen Entscheidungsbaum. Hierbei wird schrittweise überprüft, ob der Zielbewegungszustand oder eine Untermenge davon bei einem bestehenden oder angenommenen Bewegungsverhalten und/oder mit einem als Ergebnis einer Überprüfung mit einem anderen Entscheidungsbaum erhaltenen, durch zeitliche Vorgaben eingeschränkten Bewegungsprofil erreicht wird. Die möglichen Bewegungsprofile werden dann als Ergebnis der jeweils vorgeschalteten Überprüfung solange eingegrenzt, bis ein mögliches Bewegungsprofil aus der vorgegebenen Menge von Bewegungsprofilen erhalten wird. Die Überprüfungsschritte mit dem nachfolgenden Eingrenzungsergebnis sind somit baumartig hintereinander geschaltet, so dass nach einer Überprüfung und Eingrenzung des Suchraumes eine weitere Überprüfung erfolgt, bis letztendlich nur noch ein einziges mögliches Bewegungsprofil über bleibt.

Um einen Roboter von einem Raumpunkt zum nächsten zu bewegen ist es nicht ausreichend, sicherzustellen, dass über eine Bewegungstrajektorie der Zielpunkt erreicht wird. Vielmehr ist neben dem Zielpunkt der Zielbewegungszustand zu berücksichtigen, das heißt die gewünschte Geschwindigkeit im Zielpunkt, die gewünschte Beschleunigung im Zielpunkt und/oder die gewünschte Beschleunigungsänderung (Ruck) im Zielpunkt. Mit Hilfe der Bewegungstrajektorie kann durch eine Sequenz von Beschleunigungs- und Verzögerungsphasen sichergestellt werden, dass der Zielpunkt in kürzestmöglicher Zeit bei gleichzeitigem Erreichen des Zielbewegungszustandes erreicht wird. Dabei ist sicherzustellen, dass Randbedingungen, wie beispielsweise die maximal zulässige Beschleunigung oder maximal zulässige Beschleunigungsänderungen eingehalten werden.

Um eine optimale Bewegungstrajektorie unter Berücksichtigung der Randbedingungen und des Zielbewegungszustandes zu berechnen, ist ein erheblicher Rechenaufwand erforderlich, so dass das Generieren aktualisierter Bewegungstrajektorien während der Bewegung für aktuelle Zeitintervalle eines Regelintervalles große Schwierigkeiten bereitet.

Mit der vorliegenden Erfindung wird nun vorgeschlagen, eine Menge von Bewegungsprofilen vorzugeben und bei der Suche nach einer zeitoptimalen, zulässigen Bewegungstrajektorie unter den vorgegeben Bewegungstrajektorien eine geeignete auszuwählen. Dieser Lehre liegt die Erkenntnis zugrunde, dass die Arten der benötigten Bewegungstrajektorien begrenzt sind und damit eine rein mathematische Lösung mittels Differenzialgleichungen nicht notwendig ist. Eine solche mathematische Lösung würde zuviel Rechenzeit erfordern.

Vielmehr erfolgt die Auswahl eines geeigneten Bewegungsprofiles anhand von Entscheidungsbäumen, durch die unter Überprüfung, ob mit einem angenommenen Bewegungsverhalten der Zielbewegungszustand oder eine Untermenge davon erreicht wird, die Menge der möglichen Bewegungsprofile schrittweise reduziert wird.

Bei der Überprüfung kann z. B. eine Untersuchung erfolgen, was bei einer extremen Änderung des Bewegungsverhaltens passiert. Zum Beispiel kann überprüft werden, ob der Zielbewegungszustand erreicht wird, wenn die Beschleunigung abrupt auf Null gesetzt wird.

Diese Auswahl eines Bewegungsprofiles aus einer Menge von vorgegebenen Bewegungsprofilen durch Entscheidungsbäume hat den Vorteil, dass die Auswahl mit vertretbarem Rechenaufwand relativ schnell durchgeführt werden kann. Alternativ wäre auch denkbar, alle Bewegungsprofile der vorgegebenen Menge einzeln hintereinander auszutesten und zu überprüfen, ob diese zur Erreichung eines Zielbewegungszustandes bei geeigneter Parametrisierung verwendet werden können. Ein solches Testverfahren erfordert jedoch einen zu hohen Rechenaufwand und ist daher zu langsam für die Online-Generierung von Bewegungstrajektorien während der Bewegung des Mechanismus.

Nachdem eine Auswahl des Bewegungsprofiles, z. B. mit Hilfe eines Entscheidungsbaumes erfolgt ist, kann das Bewegungsprofil dann parametrisiert werden, um eine geeignete Bewegungstrajektorie zu erhalten. Unter Verwendung der ausgewählten und parametrisierten Bewegungsprofile für die betrachteten positionsgesteuerten Bewegungsfreiheitsgrade werden dann die Führungswerte für das aktuelle Regelintervall berechnet.

Das aktuelle Regelintervall kann dabei durch gleichbleibende Zeiträume zwischen aufeinander folgenden Zeitpunkten während der Bewegung vorgegeben sein. Zu festgelegten Zeitpunkten (i.d.R. im Regeltakt) wird dann das Generieren einer aktualisierten Bewegungstrajektorie gestartet und nach Berechnung der Führungswerte diese noch während des Regelintervals an die Robotersteuerung übergeben, um den Roboter mit Hilfe der neuen Führungswerte weiter anzusteuern. Dies wird während der Bewegung des Roboters ständig zu gleichbleibenden Zeitintervallen wiederholt.

Besonders vorteilhaft ist es, wenn das Verfahren mit Hilfe von zwei vorgegebenen Mengen von Bewegungsprofilen durchgeführt wird, wobei in einem ersten Schritt anhand einer ersten vorgegeben Menge von Bewegungsprofilen die minimal mögliche Zeit zum Erreichen des vorgegebenen Bewegungszustandes und eine zeitoptimale Synchronisationszeit bestimmt wird und im zweiten Schritt mit Hilfe einer zweiten vorgegebenen Menge von Bewegungsprofilen die zu generierende Bewegungstrajektorie ausgewählt und parametrisiert wird. Das Verfahren hat dann die Schritte:

a) Auswählen und Parametrisieren von Bewegungsprofilen für positionsgesteuerte Bewegungsfreiheitsgrade aus einer vorgegebenen Menge von Bewegungsprofilen, unter dessen Anwendung ein vorgegebener Zielbewegungszustand auf einer Bewegungstrajektorie unter vorgegebenen Randbedingungen erreichbar ist, durch

a1) Bestimmen der mit dem ausgewählten Bewegungsprofil minimal möglichen Zeit ($t_{min}$) zum Erreichen des vorgegebenen Zielbewegungszustandes für jeden einzelnen positionsgesteuerten Bewegungsfreiheitsgrad;
a2) Bestimmen von zeitlichen Grenzen für Zeitintervalle, in denen der vorgegebene Zielbewegungszustand unter den vorgegebenen Randbedingungen mit dem Bewegungsprofil nicht erreichbar ist; und
a3) Bestimmen einer zeitoptimalen Synchronisationszeit ($t_{sync}$), die größer als die im Schritt b) bestimmte minimal möglichen Zeit ($t_{min}$) und außerhalb der im Schritt c) bestimmten zeitlichen Grenzen ($[d_1 ;d_2]$) liegt, in der der vorgegebene Zielbewegungszustand unter den vorgegebenen Randbedingungen in allen betrachten positionsgesteuerten Bewegungsfreiheitsgraden erreichbar ist;
b) Generieren einer Bewegungstrajektorie durch Auswählen und Parametrisieren von Bewegungsprofilen für positionsgesteuerte Bewegungsfreiheitsgrade aus einer zweiten vorgegebenen Menge von Bewegungsprofilen, unter dessen Anwendung ein vorgegebener Zielbewegungszustand auf einer Bewegungstrajektorie unter vorgegebenen Randbedingungen und Einhaltung der zeitoptimalen Synchronisationszeit erreichbar ist; und
c) Berechnen von Führungswerten für das aktuelle Regelintervall unter Verwendung der generierten Bewegungstrajektorie.

Im ersten Abschnitt bestehend aus dem Schritt a) einschließlich der Schritte a1) und a2) werden für jeden positionsgesteuerten Bewegungsfreiheitsgrad die zulässigen Zeitfenster bestimmt, in denen der Zielbewegungszustand ohne unnötiges Überschreiten der vorgegebenen Maximalwerte für Geschwindigkeit, Beschleunigung, Ruck und/oder Rückänderung erreichbar wäre. Nachdem dies für alle positionsgesteuerten Bewegunsfreiheitsgrade erfolgt ist, wird aus diesen Zeitfenstern in Schritt a3) die kürzestmögliche (zeitoptimale) Ausführungszeit $t_{sync}$ bestimmt.

Diese (Synchronisations-)Zeit wird dann in der aus dem Schritt b) bestehenden zweiten Stufe genutzt, um die Bewegungstrajektorien für die betrachteten positionsgesteuerten Bewegungsfreiheitsgrade zu synchronisieren. Dabei erfolgt eine erneute Auswahl von Bewegungstrajektorien unter einer zweiten vorgegebenen Menge von Bewegungsprofilen. Durch die im Schritt a3) bestimmte zeitoptimale Synchronisationszeit ist der Entscheidungsraum auf ein weiteres Merkmal weiter eingeschränkt. Die zweite Menge vorgegebener Bewegungstrajektorien ist hierauf abgestimmt.

Als Bewegungsprofile können die Geschwindigkeit des Mechanismus in einem jeweils zugeordneten Bewegungsfreiheitsgrad definierende Geschwindigkeitsprofile herangezogen werden.

Denkbar ist es aber auch, wenn Beschleunigungsprofile benutzt werden, die die Beschleunigung des Mechanismus in einem zugeordneten Bewegungsfreiheitsgrad definieren. Möglich ist es auch, die zeitliche Beschleunigungsänderung (Ruck) des Mechanismus in einem zugeordneten Bewegungsfreiheitsgrad definierende Ruckprofile heranzuziehen.

Als jeweils auf einen zugeordneten Bewegungsfreiheitsgrad bezogene Randbedingungen können eine maximale und/oder minimale Geschwindigkeit des Mechanismus in einem jeweiligen Bewegungsfreiheitsgrad berücksichtigt werden. Diese Randbedingung legt z.B. fest, dass ein Roboter eine maximale Vorwärtsfahr- oder Rückwärtsfahrgeschwindigkeit nicht überschreiten darf. Als Randbedingungen können alternativ oder zusätzlich hierzu eine maximale Beschleunigung des Mechanismus in einem jeweiligen Bewegungsfreiheitsgrad und/oder eine maximal Beschleunigungsänderung (Ruck) in einem jeweiligen Bewegungsfreiheitsgrad berücksichtigt werden. Mit diesen Randbedingungen kann insbesondere sichergestellt werden, dass die mechanische Belastung der Gelenke und der Antriebsglieder nicht überschritten wird oder eine definierte vom Benutzer gewünschte Verfahrgeschwindigkeit verwendet wird.

Als Zielbewegungszustände für eine Menge positionsgesteuerter Bewegungsfreiheitsgrade können ein Zielpositionsvektor für die Position des Mechanismus an einem Zielpunkt, Zielgeschwindigkeitsvektor für die Geschwindigkeit des Mechanismus an einem Zielpunkt, Zielbeschleunigungsvektor für die Beschleunigung des Mechanismus an dem Zielpunkt und/oder ein Zielbeschleunigungsänderungsvektor für den Zielruck (d.h. die Zielbeschleunigungsänderung) des Mechanismus an dem Zielpunkt herangezogen werden. Neben der durch den Zielpositionsvektor festgelegten Zielposition beispielsweise eines bestimmten Punktes am Endeffektor eines Roboters im Raum kann der von einem Ausgangsbewegungszustand über eine Bahnkurve zu erreichende Zielbewegungszustand am Zielpunkt auf diese Weise durch individuelle Zielgeschwindigkeiten für jeden der betrachteten Bewegungsfreiheitsgrade, durch individuelle Zielbeschleunigungen für jeden der betrachteten Bewegungsfreiheitsgrade und/oder durch individuelle Zielbeschleunigungsänderungen für jeden der betrachteten Bewegungsfreiheitsgrade vorgegeben werden.

In entsprechender Weise kann die Steuerung des Roboters durch Führungswerte für eine Menge positionsgesteuerte Bewegungsfreiheitsgrade erfolgen, die einen Positionsvektor, einen Geschwindigkeitsvektor, einen Beschleunigungsvektor und/oder Beschleunigungsänderungsvektor für das aktuelle Regelintervall enthalten, um damit den nächsten Bewegungszustand des Mechanismus festzulegen. In Abhängigkeit von diesem Führungswerten kann dann in an sich bekannter Weise eine Regelung des Mechanismus durch eine untergeordnete Regelungseinrichtung erfolgen.

Während der Bewegung können sich zulässige Grenzwerte für den Bewegungszustand dynamisch ändern. So können beispielsweise die zulässigen Drehmomente von der Art der Bewegung, insbesondere den für die Bewegung aktivierten Gelenken, abhängig sein. Daher sind Situationen denkbar, in denen der aktuelle Bewegungszustand unzulässig ist und außerhalb vorgegebener Grenzwerte liegt.

Vorzugsweise erfolgt daher in einem vorangeschalteten Schritt ein Bestimmen eines anfänglichen Abschnittes eines Bewegungsprofiles, mit dem ein außerhalb vorgegebener Grenzwerte liegender aktueller Bewegungszustand des Mechanismus in den durch die Grenzwerte vorgegebenen zulässigen Bereich überführt wird und dann in zulässigen Grenzen gehalten werden kann.

Die Aufgabe wird weiterhin durch den positionsgesteuerten Mechanismus mit den Merkmalen des Anspruchs 9 gelöst.

Die Erfindung wird nachfolgend anhand eines Ausführungsbeispiels mit den beigefügten Zeichnungen näher erläutert.

Es zeigen:

Figur 1 -    Blockdiagramm eines positionsgesteuerten Mechanismus mit einer Einheit zur Generierung von Führungsgrößen aus aktualisierten Bewegungstrajektorien und untergeordnete Regelungseinheit:

Figur 2 -    Struktogram des Verfahrens zur Steuerung von in mehreren Bewegungsfreiheitsgraden beweglichen Mechanismen;

Figur 3 -    Skizze möglicher Beschleunigungsprofile für die Auswahl im Schritt a);

Figur 4 -    Skizze einer beispielhaften vorgegebenen zweiten Menge von Bewegungsprofilen für die Auswahl im Schritt e);

Figur 5 -    vereinfachte Skizze eines Entscheidungsbaumes zur Auswahl einer Bewegungstrajektorie;

Figuren 6a) bis c) -    beispielhafte Positions-, Geschwindigkeits- und Beschleunigungsverläufe über die Zeit, aus denen Führungsgrößen generiert werden.

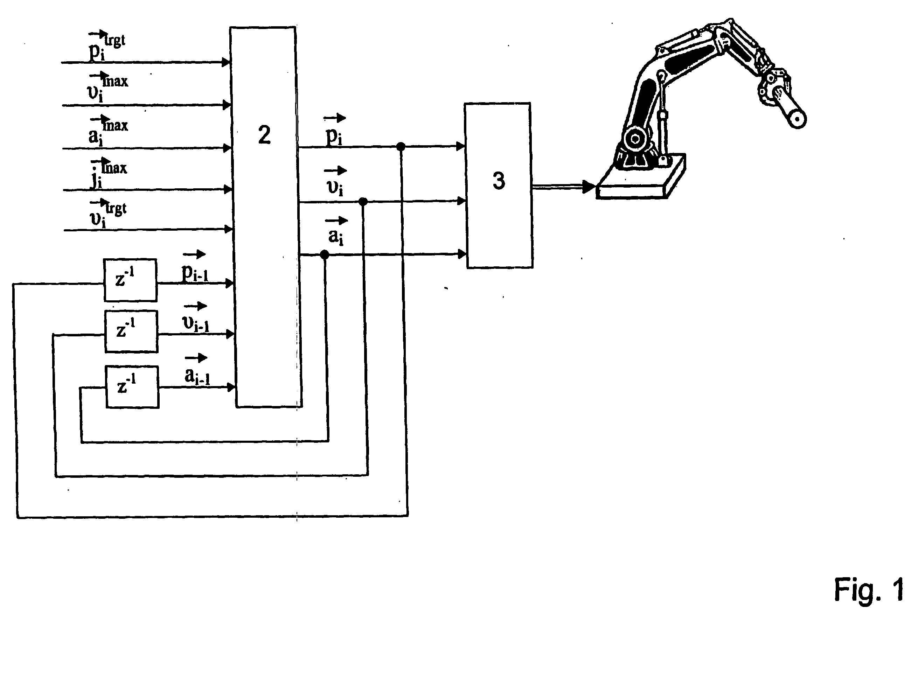

Figur 1 lässt ein Blockdiagramm eines positionsgesteuerten Mechanismus 1 in Form eines Roboters erkennen, der mit Hilfe einer übergeordneten Führungsgrößeneinheit 2 zur Online-Berechnung einer Bewegungstrajektorie während der Bewegung für aktuelle Zeitpunkte eines Regelintervalls und Generieren von Führungsgrößen und einer untergeordneten Regelungseinheit 3 in Abhängigkeit von den Führungsgrößen $\vec{p}\,\vec{v}$ und $\vec{a}$ angesteuert wird.

Der Zielbewegungszustand wird als Eingangsgröße in Form eines Zielpositionsvektors $\vec{p}_i^{\,trgt}$ und eines Zielbeschleunigungsvektors $\vec{a}_i^{\,trgt}$ festgelegt. Ein bestimmtes Koordinatensystem (z.B. ein Werkzeugkoordinatensystem) soll somit ein gegebenes Zielkoordinatensystem $\vec{p}_i^{\,trgt}$ im Raum mit einer Zielgeschwindigkeit $\vec{v}_i^{\,trgt}$ erreichen. Ausgangspunkt für die Führungsgrößen-Generierungseinheit 2 ist ein beliebiger Ist-Bewegungszustand zu Beginn des Regelintervalls, der durch die im vorhergehende Schritt für den Zeitpunkte i-1 berechneten Führungswerten bestimmt ist. Diese Führungswerte beinhalten eine Positionsvektor $\vec{p}_{i-1}$, einen Geschwindigkeitsvektor $\vec{v}_{i-1}$ und einen Beschleunigungsvektor $\vec{a}_{i-1}$.

Als Randbedingungen für das aktuelle Regelintervall zum Zeitpunkt i sind zudem noch Maximalwerte für die Geschwindigkeit, die Beschleunigung und/oder die Beschleunigungsänderung (Ruck) in dem betrachteten Freiheitsgraden vorgegeben. Dies sind der maximale Geschwindigkeitsvektor $\vec{v}_i^{max}$, der maximale Beschleunigungsvektor $\vec{a}_i^{max}$ und der maximale Ruck $\vec{j}_i^{trgt}$.

Von diesen Eingangswerten können je nach Typ des realisierten Verfahren zur Online Trajektorengenerierung ausgewählte Parameter zu Null gesetzt werden, so sind Verfahren denkbar, bei denen die Zielgeschwindigkeit, die Zielbeschleunigung und der Zielruck gleich Null ist. Ebenso können auch Verfahren genutzt werden, bei denen die Zielgeschwindigkeit ungleich Null ist, die Zielbeschleunigung und der Zielruck jedoch auf Null gesetzt wird. Diese Verfahren sind hinsichtlich ihrer Komplexität noch gut handhabbar. Komplizierter sind Verfahren, bei denen die Zielgeschwindigkeit, die Zielbeschleunigkeit ungleich Null und der Zielruck gleich oder ungleich Null gesetzt wird.

Die Verfahren können sich auch im Hinblick auf die Randbedingungen dahingehend unterscheiden, ob während der Bewegung der Ruck unendlich oder begrenzt sein soll oder ob die Rucksteigung, das heißt die Änderung des Ruckes, begrenzt wird.

Durch die Randbedingung der Ruckbegrenzung werden ruckschwache Bewegungstrajektorien erhalten, die für den praktischen Einsatz gut geeignet sind und die Langlebigkeit des Mechanismus, insbesondere der Mechanik gewähren. Die Randbedingung der Rucksteigung führt ebenso wie die Berücksichtigung von Zielbewegungszuständen, bei denen die Zielbeschleunigung und ggf. sogar der Zielruck ungleich Null ist, zu einem sehr komplexen Auswahlverfahren, das eine sehr hohe Rechenleistung erfordert.

In der Figur 1 bezeichnet p Positionen, v Geschwindigkeiten, a Beschleunigungen und j Rucke. Werte mit dem Index max repräsentieren Maximalwerte einer Größe und Werte mit dem Index trgt definieren Zielwerte einer Größe. Der Index i kennzeichnet den aktuellen (diskreten) Zeitpunkt des aktuellen Regelintervalls, wohingegen der Index i-1 den Zeitpunkt des letzten Regelintervalls beschreibt.

Die dargestellten Eingangswerte werden durch das darüber liegende System vorgegeben. Dieses kann im einfachsten Fall ein von einem Programmierer entwickeltes Roboterprogramm oder aber auch eine komplexe Regelstruktur sein, wie sie z. B. in B. Finkemeyer, T. Kröger und F. M Wahl: Executing Assembly Tasks Specified by Manipulation Primitive Nets, in: Advanced Robotics VSP and Robotics Society of Japan, Vol. 19, No. 5, June, 2005, Seiten 591 bis 611 vorgeschlagen ist. Die Ausgangswerte der Führungsgrößen-Generierungseinheit 2 sind die Eingangswerte der darunter liegenden Roboterregelungsstruktur, die letztlich durch eine Kaskade mehrerer Regler den Roboter der generierten Bewegungstrajektorie folgen lässt.

Das Generieren einer aktualisierten Bewegungstrajektorie während der Bewegung für aktuelle Zeitpunkte eines Regelintervalls erfolgt unter Verwendung einer vorgegebenen Menge von Bewegungsprofilen durch

- Auswählen und Parametrisieren von Bewegungsprofilen für positionsgesteuerte Bewegungsfreiheitsgrade aus einer vorgegebenen Menge von Bewegungsprofilen, unter dessen Anwendung ein vorgegebener Zielbewegungszustand auf einer Bewegungstrajektorie unter vorgegebenen Randbedingungen erreichbar ist; und

- Berechnen von Führungswerten für das aktuelle Regelintervall unter Verwendung der ausgewählten und parametrisierten Bewegungsprofile.

Dies beinhaltet eine Berechnung der minimalen Ausführungszeit, eine Synchronisation aller positionsgesteuerten Bewegungsfreiheitsgrade und eine Berechnung des nächsten Bewegungszustandes, der als Führungswert der darunter liegenden Regelungseinheit 3 übergeben wird, um den Roboter der aktualisierten Bewegungstrajektorie folgen zu lassen.

Das Generieren einer aktualisierten Bewegungstrajektorie und die Berechnung von Führungswerten wird anhand eines Verfahrenstyps im Folgenden beschrieben, bei der die Zielgeschwindigkeit ungleich Null ist, die Zielbeschleunigung und der Zielruck hingegen gleich Null gesetzt werden. Bei diesem Verfahrenstyp ist der Ruck während der Bewegung zudem begrenzt.

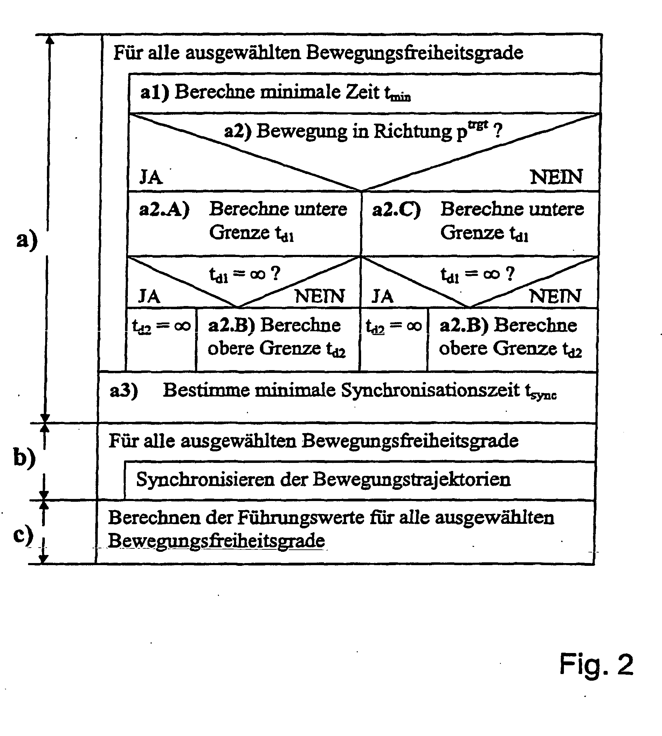

Figur 2 lässt ein Struktogramm des Verfahrensablaufes erkennen. In einem ersten Schritt werden für alle selektierten Bewegungsfreiheitsgrade, das heißt z. B. für alle drei Achsen im kartesischen Koordinatensystem, allen Vektoren des Eulerschen Vektorraumes oder allen Bewegungsfreiheitsgraden eines Gelenkvariablenraumes, zulässige Zeitbereiche bestimmt, in denen der Zielbewegungszustand mit einem ausgewählten Bewegungsprofil erreichbar ist, um eine minimale Synchronisationszeit zu bestimmen.

In einem zweiten Schritt wird für alle selektierten Bewegungsfreiheitsgrade eine Synchronisation der nochmals aus einer zweiten Mengen vorgegebener Bewegungsprofile ausgewählten Bewegungsprofile durchgeführt.

In einem dritten Schritt erfolgt die Berechnung von Führungswerten für das aktuelle Regelintervall unter Verwendung der generierten und synchronisierten Bewegungstrajektorien für alle betrachteten Bewegungsfreiheitsgrade.

Im Schritt a1) wird für jeden positionsgesteuerten Bewegungsfreiheitsgrad seine minimale Ausführungszeit $t_{min}$ zum Erreichen eines Zielbewegungszustandes berechnet. Dabei werden zuerst die Beschleunigungs- und Geschwindigkeitswerte innerhalb ihrer Grenzen geführt und danach wird mittels eines Entscheidungsbaumes das optimale Beschleunigungsprofil bestimmt. Hierfür kommt nur eine bestimmte Anzahl von vorgegebenen Bewegungsprofilen in Frage. Dabei muss der gesamte Raum, der durch die Eingangswerte aufgespannt wird, durch den im Schritt a1) entwickelten Entscheidungsbaum abgedeckt werden. Bei dem Beispiel gemäß Figur 1 mit acht Eingangswerten muss somit der gesamte achtdimensionale Raum aufgespannt sein.

Nachdem das gesuchte Bewegungsprofil gefunden wurde, wird ein nicht lineares Gleichungssystem gelöst und damit die minimale Ausführzeit $t_{min}$ und Ausnutzung der gegebenen Maximalwerte für Ruck, Beschleunigung und Geschwindigkeit berechnet.

Um in der Lage zu sein, alle positionsgesteuerten Bewegungsfreiheitsgrade und ggf. auch deren Beschleunigungsphasen zeitlich miteinander zu synchronisieren ist es notwendig, dass sich alle Bewegungsprofile zeitlich beliebig strecken lassen. Dieses Kriterium ist jedoch nicht immer erfüllt, da es Fälle gibt, die sich auf Zeiten, die in einem bestimmten Zeitintervall liegen, nicht synchronisieren lassen.

Im Schritt a2) werden somit die unzulässigen Zeitbereiche festgestellt.

Dies wird anhand eines Beispieles mit einem Bewegungsfreiheitsgrad, das heißt einer Bewegungsrichtung verdeutlicht.

Wenn ein Fahrzeug mit 80 km/h auf eine Ortschaft zufährt und sich 500 m vor dem Ortsschild befindet und das Ziel hat, genau beim Ortsschild 50 km/h zufahren, sollte zur Ereichung dieses Ziels in kürzest möglicher Geschwindigkeit erst eine Beschleunigung z. B. auf 95 km/h erfolgen und dann muss so abgebremst werden, dass das Fahrzeug nach 2 Sekunden genau beim Ortsschild die gewünschten 50 km/h erreicht.

Wenn für diese Aufgabe nun eine größere Zeit, z. B. 4 Sekunden, vorgegeben werden würde, müsste ggf. vorerst auf z. B. 30 km/h abgebremst werden und anschließend eine Beschleunigung erfolgen, so dass wieder genau beim Ortsschild die Geschwindigkeit von 50 km/h erreicht wird.

Besteht die Aufgabe jedoch darin, das Ortsschild genau nach 6 Sekunden zu erreichen, so ist es eventuell unmöglich das Ziel zu erreichen. Wenn ein Anbremsen auf unter 30 km/h erfolgt, ist nicht mehr genügend Anlaufweg vorhanden, um auf die gewünschten 50 km/h zu beschleunigen. Daher muss in einem solchen Fall erst bis zum Stillstand abgebremst und zurückgesetzt werden, um den Beschleunigungsweg entsprechend der Aufgabe zu vergrößern. Nach dem Zurücksetzen muss bis zum Stillstand abgebremst werden, und letztlich wieder so beschleunigt werden, dass beim Ortsschild exakt 50 km/h erreicht wird. Hierzu ist jedoch eine Zeit von 12 Sekunden erforderlich. Es ist bei diesem Bewegungsprofil somit nicht möglich, den gewünschten Bewegungszustand innerhalb des Zeitintervalls von 4 bis 12 Sekunden zu erreichen.

Derartige Fallkonstellationen werden in den Schritten a2) und a2.A) bzw. in den Schritten a2) und a2.C) überprüft. Liegt ein solcher Fall nicht vor, lässt sich die im Schritt a1) berechnete Zeit beliebig strecken. Falls es jedoch ein solches "verbotenes" Zeitintervall gibt, wird in Schritt a2.A) bzw. in Schritt a2.C) die untere Grenze $t_{d1}$ und im Schritt a2.B) die obere Grenze $t_{d2}$ des verbotenen Zeitintervalls berechnet. Hierbei muss wieder der gesamtmögliche Eingangswertebereich durch vier Entscheidungsbäume a2), a2.A), a2.B) und a2.C) abgedeckt werden.

Zuerst wird durch jeweils einen weiteren Entscheidungsbaum das für die jeweilige Aufgabe gesuchte Bewegungsprofil ermittelt. Dann wird wieder in Abhängigkeit des Bewegungsprofils ein Gleichungssystem gelöst, um die untere Grenze $t_{d1}$ und die obere Grenze $t_{d2}$ für das verbotene Zeitintervall zu errechnen.

Nachdem für alle positionsgesteuerten Bewegungsfreiheitsgrade die Grenzen $t_{d1}$ und $t_{d2}$ der verbotenen Zeitintervalle sowie alle minimal möglichen Ausführungszeiten $t_{min}$ bekannt sind, lässt sich mit dem kleinstmöglichen Wert, der nicht in einem verbotenen Zeitintervall liegt, eine minimale (zeitoptimale) Synchronisationszeit $t_{sync}$ bestimmen, nach der alle positionsgesteuerten Bewegungsfreiheitsgrade ihren Zielbewegungszustand erreichen können und werden.

Im zweiten Schritt b) werden die zur Berechnung der Führungswerte eigentlich genutzten Bewegungsprofile ausgewählt und parametrisiert.

Zur Synchronisation der Bewegungstrajektorien werden letztlich die Koeffizienten verschiedener aneinander gestückelter Polynome berechnet. Für jeden Teil der Bewegungstrajektorie gibt es jeweils ein Polynom zur Beschreibung des Beschleunigungsverlaufes, ein Polynom zur Beschreibung des Geschwindigkeitsverlaufes und ein Polynom zur Beschreibung des Positionsverlaufes. Auch dieser Schritt wird mittels eines Entscheidungsbaumes erledigt. Zuerst wird wieder dafür gesorgt, dass die Beschleunigungs- und Geschwindigkeitswerte innerhalb ihrer Grenzen gebracht und gehalten werden. Danach gilt es wiederum das korrekte Beschleunigungsprofil zu ermitteln. Dabei ist die Anzahl der zweiten vorgegebenen Menge von Bewegungsprofilen wieder eingeschränkt.

Nachdem das korrekte Bewegungsprofil bestimmt wurde, kann wiederum durch Lösen eines weiteren Gleichungssystems eine Berechnung aller Koeffizienten der bis zu 13 aneinander gestückelten Polynome für Beschleunigung, Geschwindigkeit und Position erfolgen. Damit ist die zeitoptimale Bewegungstrajektorie aus einem beliebigen, unplanbaren und unvorhersehbaren, durch das System gegebenen Bewegungszustand heraus berechnet (Schritt c).

Für die darunter liegende Regelung des Mechanismus 1 ist jedoch nur der nächste Bewegungszustand, also der Bewegungszustand zum Zeitpunkt i relevant, so dass im Schritt c) nur die Werte für das erste der bis zu 13 Polynome berechnet werden müssen. Damit werden der gewünschte Beschleunigungsvektor, der gewünschte Geschwindigkeitsvektor sowie der gewünschte Positionsvektor für das aktuelle Regelintervall gewonnen. Im folgenden Regelintervall werden dann alle Schritte von neuem ausgeführt.

Für alte Bewegungsfreiheitsgrade, deren Ausführungszeit gestreckt wurde, das heißt bei denen die Synchronisationszeit $t_{sync}$ größer als die minimal mögliche Ausführungszeit $t_{min}$ ist, gibt es für die Synchronisation prinzipiell immer unendlich viele Möglichkeiten zur Generierung der Trajektorie. Es bietet sich daher an, dass wenn einmal die Trajektorie berechnet wurde und sich die Eingangswerte während der gesamten Ausführung nicht verändern, zu jedem nach der ersten Berechnung folgenden Zeitpunkte ein Bewegungszustand berechnet wird, der sich exakt in die beim ersten Mal berechneten Polynome eingliedern lässt. Damit wird ein deterministisches System geschaffen, das aus einem gegebenen (beliebigen) Bewegungszustand immer die gleiche Trajektorie berechnet. Dies kann durch ein bestimmtes Kriterium, das durch einen Entscheidungsbaum im Schritt b) berücksichtigt wird, erledigt werden, so dass bei gleichen Eingangswerten und gleichen Synchronisationszeiten immer der gleiche Beschleunigungs-, Geschwindigkeits- und Positionsverlauf berechnet wird. Durch dieses Kriterium löst dieser Entscheidungsbaum gleichzeitig ein Extremwertproblem, um ein deterministisches (zeitliches) Strecken der Trajektorie zu ermöglichen. Dieses führt letztendlich sogar dazu, dass das System auch mit sich kontinuierlich verändernden, z. B. durch einen Regler erzeugten Eingangswerten arbeiten kann und dennoch stetige, kontinuierliche Ausgangswerte liefert.

Weiterhin ist es möglich, phasensynchrone Trajektorien zu erzeugen. Phasensynchrone Trajektorien stellen einen Sonderfall dar, der es ermöglicht, die Trajektorie in einem (beliebigen und beliebig dimensionalen) Raum exakt entlang einer (eindimensionalen) Geraden verlaufen zu lassen.

Die erste Voraussetzung hierfür ist, dass alle Vektoren der stetigen Bewegungsgrößen sowie der Differenzvektor zwischen Ist- und Soll-Positionsvektor kollinear sind, das heißt die gleiche Orientierung haben. Sofern dies gegeben ist, ist als nächstes festzustellen, in welcher Phase eines Beschleunigungsprofils sich die jeweiligen Bewegungsfreiheitsgrade befinden. Sind alle Bewegungsfreiheitsgrade in derselben Phase, lässt sich zwischen Schritt a) und Schritt b) für alle Bewegungsfreiheitsgrade, die nicht die Synchronisationszeit $t_{sync}$ vorgegeben haben, ein adaptierter maximaler Ruck berechnen. Wenn diese adaptierten maximalen Rucke sämtlich kleiner sind als die gegebenen maximalen Rucke, ist eine Phasensynchronisation aller positionsgesteuerten Bewegungsfreiheitsgrade möglich. Dann würde Schritt b) mit den berechneten adaptierten maximalen Rucken ausgeführt werden, so dass eine phasensynchrone Trajektorie entsteht.

Beispielhaft für den Verfahrenstyp mit Zielgeschwindigkeit ungleich Null und Zielbeschleunigung Zielruck gleich Null sowie einem begrenzten Ruck wird mit einem Entscheidungsbaum nach Durchführung des Schritts a1) für alle Bewegungsfreiheitsgrade folgende Abfrage durchgeführt:

- Sind die gegebenen Vektoren $\vec{v}_{i-1}$, $\vec{v}_i^{\,trgt}$, $\vec{a}_{i-1}$ und ($\vec{p}_{i-1}$ - $\dot{\vec{p}}_i^{\,trgt}$) alle kollinear und lassen sich durch einen Einheitsvektor berechnen, der die gleiche Orientierung hat wie die vier oben genannten Vektoren?

- Liefert der vorangestellte Teil eines jeden Entscheidungsbaumes, derart, falls die Geschwindigkeits- oder Beschleunigungseingangswerte der positionsgesteuerten Freiheitsgrade ($\vec{v}_i^{\,max}$, $\vec{a}_i^{\,max}$) außerhalb ihrer Maximalwerte ($\vec{v}_i^{\,max}$, $\vec{a}_i^{\,max}$) liegen oder im Verlauf der Trajektorie jene verlassen könnten, keinen Beitrag (keine vorangestellten Trajektoriesegmente) ?

- Lassen sich derart neue Maximalwerte für Geschwindigkeiten ($\vec{v}_i^{\,max'}$), Beschleunigung ($\vec{a}_i^{\,max'}$) und Beschleunigungsänderungen ($\vec{j}_i^{\,max'}$) berechnen, so dass

- diese ebenfalls kollinear zu den im ersten Punkt genannten Vektoren liegen

- ihre Länge sich an dem Freiheitsgrad orientieren, für den im Schritt a1) die größte minimale Ausführungszeit $t_{min}$ berechnet wurde und

- sind alle Elemente von $\vec{v}_i^{max'}$, $\vec{a}_i^{max'}$ und $\vec{j}_i^{max'}$, die einem positionsgesteuerten Freiheitsgrad zugehören, kleiner als die vom Benutzer vorgegeben Maximalwerte $\vec{v}_i^{max}$, $\vec{a}_i^{max}$ und $\vec{j}_i^{max}$ ?

- Lassen sich alle positionsgesteuerten Bewegungsfreiheitsgrade mit dem gleichen Profil, das im Schritt a1) für den Freiheitsgrad mit der größten minimalen Ausführungszeit gewählt wurde, ausführen und lassen sich dabei der Zielbewegungszustand zum gleichen Zeitpunkt $t_{sync}$ erreichen?

Wenn alle diese Bedingungen erfüllt sind, entfallen die Schritte a2) einschließlich der Schritte a2.A) bis a2.C) und Schritt b) wird mit den Maximalvektoren $\vec{v}_i^{max'}$, $\vec{a}_i^{max'}$ und $\vec{j}_i^{max'}$ ausgeführt, so dass der Positionsverlauf der Trajektorie exakt eine eindimensionale Gerade im Raum (n-dimensional, aufgespannt durch alle n positionsgesteuerten Bewegungsfreiheitsgrade) bildet. Auf diese Weise kann ein Roboter auf einer exakten Geraden entlang fahren.

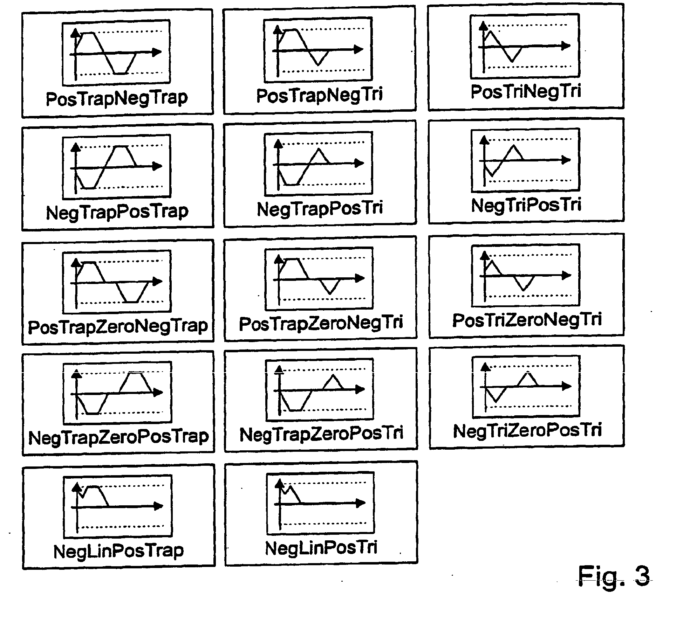

Figur 3 lässt eine erste vorgegebene Menge von Bewegungsprofilen für die Auswahl im Schritt a) erkennen. Die Bewegungsprofile bestehen aus zwei hintereinander liegenden Segmenten, die ein positives trapezförmiges Beschleunigungsprofil (PosTrap), ein negatives trapezförmiges Beschleunigungsprofil (NegTrap), ein positives dreieckiges Beschleunigungsprofil (PosTri) oder ein negatives dreiecksförmiges Beschleunigungsprofil (NegTri) haben können. Zwischen zwei Segmenten können ggf. noch Ruhezeiten mit einer Beschleunigung von Null (Zero) sein.

Erkennbar ist, dass nicht alle möglichen Kombinationen von Segmenten in der ersten vorgegebenen Menge von Bewegungsprofilen vorhanden ist, so z. B. ist keine Kombination PosTrap, PosTri, PosTrapZeroPosTrap, PosTrapZeroPosTri vorgesehen und notwendig.

Ein weiteres Profilsegment ist NegLin, das heißt eine Reduktion der Beschleunigung ohne Beschleunigungswechsel in dem Segment. Bei dem Bewegungsprofil NegLinPosTrap erfolgt zunächst eine Reduktion der Beschleunigung auf ein durch ein Parameter bestimmtes Maß und daran anschließende unmittelbar ein Übergang in ein trapezförmigen positiven Beschleunigungsverlauf mit einer Erhöhung der Beschleunigung, einer Phase, in der die Beschleunigung konstant ist und einer sich daran anschließenden Phase, bei der die Beschleunigung auf Null zurückgefahren wird.

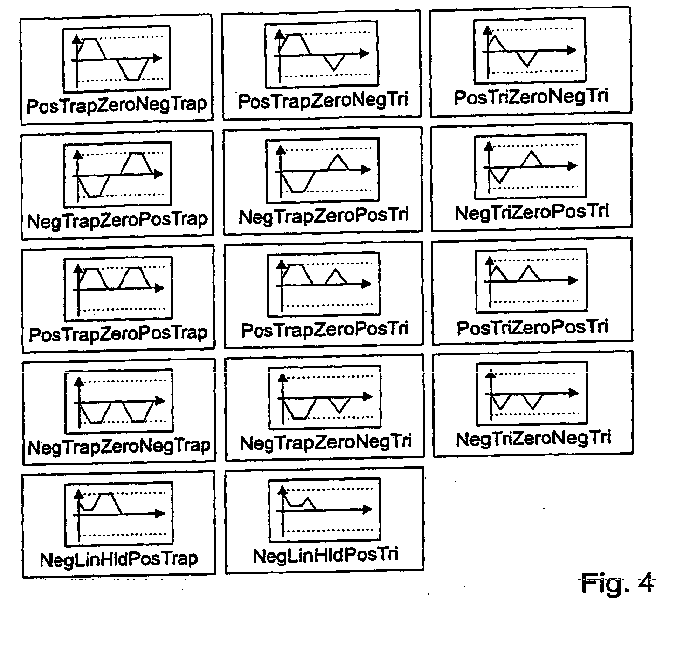

Figur 4 lässt eine zweite vorgegebene Menge von Beschleunigungsprofilen für den oben erwähnten beispielhaften Verfahrenstyp erkennen. Diese zweite vorgegebene Menge von Bewegungsprofilen wird im Schritt b) berücksichtigt. Es wird deutlich, dass sich die in dieser zweiten vorgegebenen Menge vom Bewegungsprofil enthaltenen Bewegungsprofile von der in der ersten Menge der Bewegungsprofile enthaltenen Bewegungsprofile (Figur 3) deutlich unterscheiden.

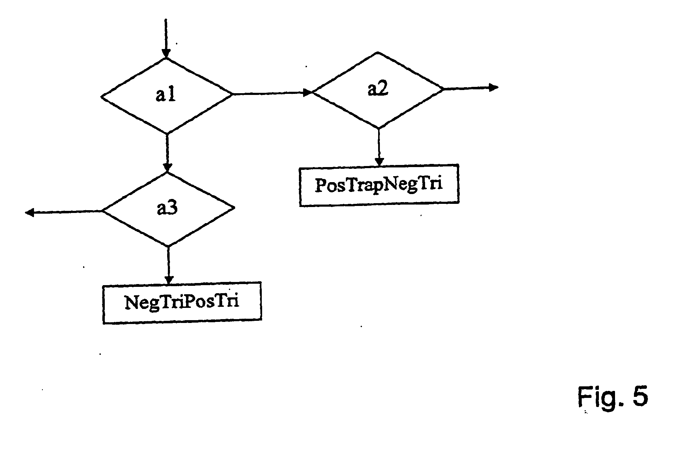

Figur 5 lässt das Prinzip des Entscheidungsbaumes zur Auswahl von Bewegungsprofilen erkennen.

In einem Schritt a1) wird überprüft, ob bei einem bestehenden oder angenommenen Bewegungsverhalten oder ggf. bei einem Bewegungsprofil einschließlich einer damit verbundenen Zeitvorgabe, das als Ergebnis eines anderen Entscheidungsbaumes erhalten wurde, ein Zielbewegungszustand oder eine Untermenge davon erreicht wird. Wenn dies der Fall ist, wird in einem weiteren Schritt a2) eine neue Untersuchung z. B. unter einen neuen Annahme eines Bewegungsverhaltens durchgeführt, bis schließlich ein mögliches Bewegungsprofil aus der vorgegebenen Menge aus Bewegungsprofilen gewonnen wird.

Entsprechend wird für den Fall, dass das Ergebnis der Überprüfung negativ ist, eine daran anknüpfende weitere Überprüfung durchgeführt. Mit Hilfe derartiger Überprüfungen a1), a2), a3)........, ai) können die nicht geeigneten Bewegungsprofile schrittweise herausgefiltert werden, ohne das ein Test alle Bewegungsprofile erfolgen muss.

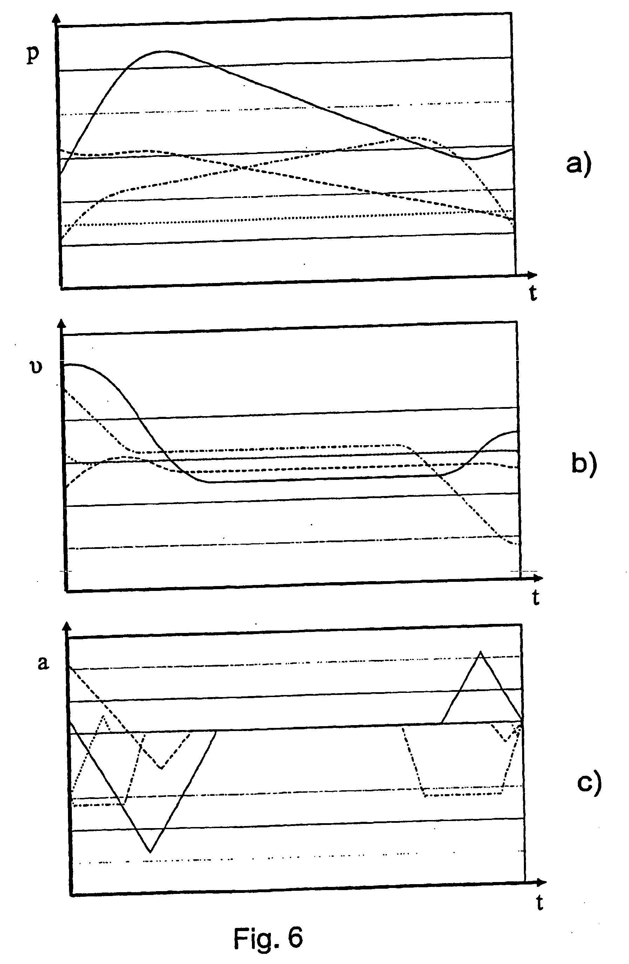

Figuren 6a) bis 6c) lassen einen beispielhaften Verlauf von Bewegungstrajektorien über die Zeit für vier Bewegungsfreiheitsgrade erkennen, wobei jedem Bewegungsfreiheitsgrad eine spezifisch gemusterte Linie zugeordnet ist. Die von dem Trajektoriengenerator generierten Beschleunigungsverläufe werden als Ergebnis zur Führung des Roboters genutzt. Erkennbar ist beispielsweise ein NegTriZeroPosTri-Verlauf für den mit durchgezogener Linie charakterisierten Bewegungsfreiheitsgrad. Die Geschwindigkeitsverläufe über die Zeit werden als Ableitung aus den zugehörigen Beschleunigungsverläufen und die Positionsverläufe als Ableitung aus den zugehörigen Geschwindigkeitsverläufen erhalten.

**Patentansprüche**

1.  Verfahren zur Steuerung von in mehreren Bewegungsfreiheitsgraden beweglichen Mechanismen mittels Bewegungstrajektorien in vorgegebenen Bewegungsfreiheitsgraden, wobei ein wiederholtes Generieren von aktualisierten Bewegungstrajektorien während der Bewegung für aktuelle Zeitpunkte eines Regelintervalls mit:

    I) Auswählen und Parametrisieren von Bewegungsprofilen für positionsgesteuerte Bewegungsfreiheitsgrade aus einer vorgegebenen Menge von Bewegungsprofilen, unter dessen Anwendung ein vorgegebener Zielbewegungszustand auf einer Bewegungstrajektorie unter vorgegebenen Randbedingungen erreichbar ist; und
II) Berechnen von Führungswerten für das aktuelle Regelintervall unter Verwendung der ausgewählten und parametrisierten Bewegungsprofile

erfolgt, **gekennzeichnet durch** Auswahl der Bewegungsprofile mit einem sequentiellen Entscheidungsbaum **durch** schrittweises Überprüfen, ob der Zielbewegungszustand oder eine Untermenge davon bei einem bestehenden oder angenommenen Bewegungsverhalten und/oder mit einem als Ergebnis einer Überprüfung mit einem anderen Entscheidungsbaum erhaltenen, **durch** zeitliche Vorgaben eingeschränkten Bewegungsprofil erreicht wird, und Eingrenzen der möglichen Bewegungsprofile als Ergebnis der jeweils vorgeschalteten Überprüfung solange, bis das mögliche Bewegungsprofil aus der vorgegebenen Menge von Bewegungsprofilen erhalten wird.

2. Verfahren nach Anspruch 1, **gekennzeichnet durch**:

    a) Auswählen und Parametrisieren von Bewegungsprofilen für positionsgesteuerte Bewegungsfreiheitsgrade aus einer vorgegebenen Menge von Bewegungsprofilen, unter dessen Anwendung ein vorgegebener Zielbewegungszustand auf einer Bewegungstrajektorie unter vorgegebenen Randbedingungen erreichbar ist, **durch**
    a1) Bestimmen der mit dem ausgewählten Bewegungsprofil minimal möglichen Zeit (tmin) zum Erreichen des vorgegebenen Zielbewegungszustandes für jeden einzelnen positionsgesteuerten Bewegungsfreiheitsgrad;
    a2) Bestimmen von zeitlichen Grenzen für Zeitintervalle, in denen der vorgegebene Zielbewegungszustand unter den vorgegebenen Randbedingungen mit dem Bewegungsprofil nicht erreichbar ist; und
    a3) Bestimmen einer zeitoptimalen Synchronisationszeit (tsync), die größer als die im Schritt a1) bestimmte minimal möglichen Zeit (tmin) und außerhalb der im Schritt a2) bestimmten zeitlichen Grenzen ([d1 ;d2]) liegt, in der der vorgegebene Zielbewegungszustand unter den vorgegebenen Randbedingungen in allen betrachten positionsgesteuerten Bewegungsfreiheitsgraden erreichbar ist;
    b) Generieren einer Bewegungstrajektorie **durch** Auswählen und Parametrisieren von Bewegungsprofilen für positionsgesteuerte Bewegungsfreiheitsgrade aus einer zweiten vorgegebenen Menge von Bewegungsprofilen, unter dessen Anwendung ein vorgegebener Zielbewegungszustand auf einer Bewegungstrajektorie unter vorgegebenen Randbedingungen und Einhaltung der zeitoptimalen Synchronisationszeit erreichbar ist; und
    c) Berechnen von Führungswerten für das aktuelle Regelintervall unter Verwendung der generierten Bewegungstrajektorie.

3. Verfahren nach Anspruch 1 oder 2, **dadurch gekennzeichnet, dass** Bewegungsprofile die Geschwindigkeit des Mechanismus in einem jeweils zugeordneten Bewegungsfreiheitsgrad definierende Geschwindigkeitsprofile und/oder die Beschleunigung des Mechanismus in einem zugeordneten Bewegungsfreiheitsgrad definierende Beschleunigungsprofile und/oder die zeitliche Beschleunigungsänderung (Ruck) des Mechanismus in einem zugeordneten Bewegungsfreiheitsgrad definierende Ruckprofile sind.

4. Verfahren nach einem der vorhergehenden Ansprüche, **dadurch gekennzeichnet, dass** auf den Bewegungsfreiheitsgrad bezogene Randbedingungen eine maximale Geschwindigkeit des Mechanismus in einem jeweiligen Bewegungsfreiheitsgrad und/oder eine maximale Beschleunigung des Mechanismus in einem jeweiligen Bewegungsfreiheitsgrad und/oder eine maximale Beschleunigungsänderung (Ruck) des Mechanismus in einem jeweiligen Bewegungsfreiheitsgrad ist.

5. Verfahren nach einem der vorhergehenden Ansprüche, **dadurch gekennzeichnet, dass** die Zielbewegungszustände für eine Menge positionsgesteuerter Bewegungsfreiheitsgrade durch einen Zielpositionsvektor für die Position des Mechanismus an einem Zielpunkt und/oder einen Zielgeschwindigkeitsvektor für die Geschwindigkeit des Mechanismus an einem Zielpunkt und/oder einen Zielbeschleunigungsvektor für die Beschleunigung des Mechanismus an einem Zielpunkt und/oder einen Zielbeschleunigungsänderungsvektor für die Beschleunigungsänderung (Ruck) des Mechanismus an einem Zielpunkt definiert sind.

6. Verfahren nach einem der vorhergehenden Ansprüche, **dadurch gekennzeichnet, dass** Führungswerte für eine Menge positionsgesteuerter Bewegungsfreiheitsgrade ein Positionsvektor und/oder ein Geschwindigkeitsvektors und/oder ein Beschleunigungsvektor und/oder ein Beschleunigungsänderungsvektor für das aktuelle Regelintervall zur Festlegung des nächsten Bewegungszustandes des Mechanismus sind, wobei eine Regelung des Mechanismus in Abhängigkeit von diesen Führungswerten erfolgt.

7. Verfahren nach einem der vorhergehenden Ansprüche, **gekennzeichnet durch** Bestimmen von zusätzlichen anfänglichen Abschnitten für Bewegungsprofile, mit denen ein außerhalb vorgegebener Grenzwerte liegender aktueller Bewegungszustand des Mechanismus in den **durch** die Grenzwerte vorgegebenen zulässigen Bereich überführt wird und in diesen Grenzen gehalten werden kann.

8. Verfahren nach Anspruch 7, **dadurch gekennzeichnet, dass** die Grenzen durch eine maximale Geschwindigkeit des Mechanismus für jeden positionsgesteuerten Bewegungsfreiheitsgrad und/oder eine maximale Beschleunigung des Mechanismus für jeden positionsgesteuerten Bewegungsfreiheitsgrad und/oder eine maximale Beschleunigungsänderung (Ruck) des Mechanismus für jeden positionsgesteuerten Bewegungsfreiheitsgrad gegeben sind.

9. Positionsgesteuerter Mechanismus, insbesondere Roboter, mit einer Mehrzahl von Aktoren, mit von den Aktoren in positionsgesteuerten Bewegungsfreiheitsgraden antreibbaren Bewegungselementen und mit einer Steuerungseinheit zur Ansteuerung der Aktoren mittels Führungsgrößen, **gekennzeichnet durch** eine Einheit zum Generieren von Führungsgrößen aus aktualisierten Bewegungstrajektorien während der Bewegung für aktuelle Zeitpunkte eines Regelintervalls mit dem Verfahren nach einem der vorhergehenden Ansprüche enthaltend die Schritte:

I) Auswählen und Parametrisieren von Bewegungsprofilen für positionsgesteuerte Bewegungsfreiheitsgrade aus einer vorgegebenen Menge von Bewegungsprofilen, unter dessen Anwendung ein vorgegebener Zielbewegungszustand auf einer Bewegungstrajektorie unter vorgegebenen Randbedingungen erreichbar ist; und
II) Berechnen von Führungswerten für das aktuelle Regelintervall unter Verwendung der ausgewählten und parametrisierten Bewegungsprofile,

wobei die Auswahl der Bewegungsprofile mit einem sequentiellen Entscheidungsbaum **durch** schrittweises Überprüfen, ob der Zielbewegungszustand oder eine Untermenge davon bei einem bestehenden oder angenommenen Bewegungsverhalten und/oder mit einem als Ergebnis einer Überprüfung mit einem anderen Entscheidungsbaum erhaltenen, **durch** zeitliche Vorgaben eingeschränkten Bewegungsprofil erreicht wird, und Eingrenzen der möglichen Bewegungsprofile als Ergebnis der jeweils vorgeschalteten Überprüfung solange, bis das mögliche Bewegungsprofil aus der vorgegebenen Menge von Bewegungsprofilen erhalten wird, erfolgt.

## Claims

1. Method for controlling mechanisms, which are movable in a plurality of degrees of freedom of movement, by means of movement trajectories in given degrees of freedom of movement, wherein updated movement trajectories are repeatedly generated during the movement for current time points in an adjustment period involving:

I) selecting and parameterizing movement profiles for position-controlled degrees of freedom of movement from a given set of movement profiles, by the use of which a given target movement state is achievable on a movement trajectory under given boundary conditions; and
II) calculating command values for the current adjustment period using the selected and parameterized movement profiles,

**characterized by** selection of the movement profiles with a sequential decision tree by checking in a stepwise manner whether the target movement state or a subset thereof has been reached given an existing or assumed movement behaviour and/or with a movement profile which is obtained as a result of a check with another decision tree and is restricted by time specifications, and limiting the possible movement profiles as a result of the respectively preceding check until the possible movement profile is obtained from the given set of movement profiles.

2. Method according to Claim 1, **characterized by**:

a) selecting and parameterizing movement profiles for position-controlled degrees of freedom of movement from a given set of movement profiles, by the use of which a given target movement state is achievable on a movement trajectory under given boundary conditions, by

a1) determining the time (tmin), which is the minimum possible with the selected movement profile, for reaching the given target movement state for each individual position-controlled degree of freedom of movement;
a2) determining time limits for time periods in which the given target movement state is not achievable under the given boundary conditions with the movement profile; and

a3) determining a time-optimized synchronization time (tsync) which is greater than the minimum possible time (tmin) determined in step a1) and is outside the time limits ([d1; d2]) which were determined in step a2) and in which the given target movement state is achievable under the given boundary conditions in all the position-controlled degrees of freedom of movement under consideration;

b) generating a movement trajectory by selecting and parameterizing movement profiles for position-controlled degrees of freedom of movement from a second given set of movement profiles, by the use of which a given target movement state is achievable on a movement trajectory under given boundary conditions and complying with the time-optimized synchronization time; and

c) calculating command values for the current adjustment period using the generated movement trajectory.

3. Method according to Claim 1 or 2, **characterized in that** movement profiles are speed profiles defining the speed of the mechanism in a respectively associated degree of freedom of movement and/or acceleration profiles defining the acceleration of the mechanism in an associated degree of freedom of movement and/or jerk profiles defining the change in acceleration (jerk) over time of the mechanism in an associated degree of freedom of movement.

4. Method according to one of the preceding claims, **characterized in that** boundary conditions relating to the degree of freedom of movement are a maximum speed of the mechanism in a respective degree of freedom of movement and/or a maximum acceleration of the mechanism in a respective degree of freedom of movement and/or a maximum change in acceleration (jerk) of the mechanism in a respective degree of freedom of movement.

5. Method according to one of the preceding claims, **characterized in that** the target movement states for a set of position-controlled degrees of freedom of movement are defined by a target position vector for the position of the mechanism at a target point and/or a target speed vector for the speed of the mechanism at a target point and/or a target acceleration vector for the acceleration of the mechanism at a target point and/or a target change in acceleration vector for the change in acceleration (jerk) of the mechanism at a target point.

6. Method according to one of the preceding claims, **characterized in that** command values for a set of position-controlled degrees of freedom of movement are a position vector and/or a speed vector and/or an acceleration vector and/or a change in acceleration vector for the current adjustment period for defining the next movement state of the mechanism, wherein the mechanism is adjusted in dependence on these command values.

7. Method according to one of the preceding claims, **characterized by** determining additional initial sections of movement profiles, with which a current movement state, located outside given boundary values, of the mechanism is transferred into the permissible range given by the boundary values and can be kept within these boundaries.

8. Method according to Claim 7, **characterized in that** the boundaries are given by a maximum speed of the mechanism for each position-controlled degree of freedom of movement and/or a maximum acceleration of the mechanism for each position-controlled degree of freedom of movement and/or a maximum change in acceleration (jerk) of the mechanism for each position-controlled degree of freedom of movement.

9. Position-controlled mechanism, in particular robot, having a plurality of actuators, having movement elements that are drivable by the actuators in position-controlled degrees of freedom of movement, and having a control unit for controlling the actuators by means of command variables, **characterized by** a unit for generating command variables from updated movement trajectories during the movement for current time points in an adjustment period by way of the method according to one of the preceding claims including the steps of:

I) selecting and parameterizing movement profiles for position-controlled degrees of freedom of movement from a given set of movement profiles, by the use of which a given target movement state is achievable on a movement trajectory under given boundary conditions; and
II) calculating command values for the current adjustment period using the selected and parameterized movement profiles,

wherein the selection of the movement profiles is carried out with a sequential decision tree by checking in a stepwise manner whether the target movement state or a subset thereof has been reached given an existing or assumed movement behaviour and/or with a movement profile which is obtained as a result of a check with another decision tree and is restricted by time specifications, and limiting the possible movement profiles as a result of the respectively preceding check until the possible movement profile is obtained from the given set of movement profiles.

**Revendications**

1. Procédé pour commander des mécanismes mobiles dans plusieurs degrés de liberté de mouvement au moyen de trajectoires de mouvement dans des degrés de liberté de mouvement prédéfinis, une génération répétée de trajectoires de mouvement actualisées ayant lieu pendant le mouvement pour des instants actuels d'un intervalle de régulation avec :

   1) sélection et paramétrage de profils de mouvement pour des degrés de liberté de mouvement contrôlés par la position à partir d'une quantité prédéfinie de profils de mouvement, dont l'utilisation permet d'atteindre un état de mouvement visé prédéfini sur une trajectoire de mouvement sous des conditions limites prédéfinies ; et
   2) calcul de valeurs de référence pour l'intervalle de régulation actuel en utilisant les profils de mouvement sélectionnés et paramétrés,

   **caractérisé par** la sélection des profils de mouvement avec une arborescence de décision séquentielle en contrôlant étape par étape si l'état de mouvement visé ou un sous-ensemble de celui-ci est atteint avec un comportement de mouvement existant ou supposé et/ou avec un profil de mouvement obtenu en tant que résultat d'un contrôle avec une autre arborescence de décision et limité par des indications temporelles, et en limitant les profils de mouvement possibles en tant que résultat du contrôle à chaque fois effectué en amont jusqu'à ce que le profil de mouvement possible soit obtenu à partir de la quantité prédéfinie de profils de mouvement.

2. Procédé selon la revendication 1, **caractérisé par** les étapes suivantes :

   a) sélection et paramétrage de profils de mouvement pour des degrés de liberté de mouvement contrôlés par la position à partir d'une quantité prédéfinie de profils de mouvement, dont l'utilisation permet d'atteindre un état de mouvement visé prédéfini sur une trajectoire de mouvement sous des conditions limites prédéfinies, par
   a1) détermination du temps minimum possible (tmin) avec le profil de mouvement sélectionné pour atteindre l'état de mouvement visé prédéfini pour chaque degré de liberté de mouvement contrôlé en position individuel ;
   a2) détermination de limites dans le temps pour des intervalles de temps dans lesquels l'état de mouvement visé prédéfini ne peut pas être atteint avec le profil de mouvement sous les conditions limites prédéfinies ; et
   a3) détermination d'un temps de synchronisation (tsync) de durée optimale qui est supérieur au temps minimum possible (tmin) déterminé à l'étape a1) et qui se trouve en dehors des limites ([d1 ; d2]) dans le temps déterminées à l'étape a2), dans lequel l'état de mouvement visé prédéfini peut être atteint sous les conditions limites prédéfinies dans tous les degrés de liberté de mouvement contrôlés par la position considérés ;
   b) génération d'une trajectoire de mouvement en sélectionnant et en paramétrant des profils de mouvement pour des degrés de liberté de mouvement contrôlés par la position à partir d'une deuxième quantité prédéfinie de profils de mouvement, dont l'utilisation permet d'atteindre un état de mouvement visé prédéfini sur une trajectoire de mouvement sous des conditions limites prédéfinies et dont l'observation permet d'atteindre le temps de synchronisation de durée optimale ; et
   c) calcul de valeurs de référence pour l'intervalle de régulation actuel en utilisant la trajectoire de mouvement générée.

3. Procédé selon la revendication 1 ou 2, **caractérisé en ce que** les profils de mouvement sont des profils de vitesse qui définissent la vitesse du mécanisme dans un degré de liberté de mouvement à chaque fois associé et/ou des profils d'accélération qui définissent l'accélération du mécanisme dans un degré de liberté de mouvement associé et/ou des profils de saccade qui définissent la variation dans le temps de l'accélération (saccade) du mécanisme dans un degré de liberté de mouvement associé.

4. Procédé selon l'une des revendications précédentes, **caractérisé en ce que** les conditions limites relatives au degré de liberté de mouvement sont une vitesse maximale du mécanisme dans un degré de liberté de mouvement correspondant et/ou une accélération maximale du mécanisme dans un degré de liberté de mouvement correspondant et/ou une variation maximale de l'accélération (saccade) du mécanisme dans un degré de liberté de mouvement correspondant.

5. Procédé selon l'une des revendications précédentes, **caractérisé en ce que** les états de mouvement visés pour une quantité donnée de degrés de liberté de mouvement contrôlés par la position sont définis par un vecteur de position visée pour la position du mécanisme à un point visé et/ou un vecteur de vitesse visée pour la vitesse du mécanisme à un point visé et/ou un vecteur d'accélération visée pour l'accélération du mécanisme à un point visé et/ou un vecteur de variation de l'accélération visée pour la variation de l'accélération (saccade) du mécanisme à un point visé.

6. Procédé selon l'une des revendications précédentes, **caractérisé en ce que** les valeurs de référence pour une quantité donnée de degrés de liberté de mouvement contrôlés par la position sont un vecteur de position et/ou un vecteur de vitesse et/ou un vecteur d'accélération et/ou un vecteur de variation de l'accélération pour l'intervalle de régulation actuel en vue de déterminer le prochain état de mouvement du mécanisme, une régulation du mécanisme étant effectuée en fonction de ces valeurs de référence.

7. Procédé selon l'une des revendications précédentes, **caractérisé par** la détermination de sections initiales supplémentaires pour les profils de mouvement, avec lesquelles un état de mouvement actuel du mécanisme qui se trouve en dehors des valeurs limites prédéfinies est amené dans la plage autorisée prédéfinie par les valeurs limites et peut être maintenu dans ces limites.

8. Procédé selon la revendication 7, **caractérisé en ce que** les limites sont définies par une vitesse maximale du mécanisme pour chaque degré de liberté de mouvement contrôlé en position et/ou une accélération maximale du mécanisme pour chaque degré de liberté de mouvement contrôlé en position et/ou une variation maximale de l'accélération (saccade) du mécanisme pour chaque degré de liberté de mouvement contrôlé en position.

9. Mécanisme contrôlé en position, notamment robot, comprenant une pluralité d'actionneurs, comprenant des éléments de mouvement qui peuvent être entraînés par les actionneurs dans des degrés de liberté de mouvement contrôlés par la position et comprenant une unité de commande pour commander les actionneurs au moyen de grandeurs de référence, **caractérisé par** une unité pour générer des grandeurs de référence à partir de trajectoires de mouvement actualisées pendant le mouvement pour les instants actuels d'un intervalle de régulation avec le procédé selon l'une des revendications précédentes incluant les étapes suivantes :

I) sélection et paramétrage de profils de mouvement pour des degrés de liberté de mouvement contrôlés par la position à partir d'une quantité prédéfinie de profils de mouvement, dont l'utilisation permet d'atteindre un état de mouvement visé prédéfini sur une trajectoire de mouvement sous des conditions limites prédéfinies ; et
II) calcul de valeurs de référence pour l'intervalle de régulation actuel en utilisant les profils de mouvement sélectionnés et paramétrés,

la sélection des profils de mouvement s'effectuant avec une arborescence de décision séquentielle en contrôlant étape par étape si l'état de mouvement visé ou un sous-ensemble de celui-ci est atteint avec un comportement de mouvement existant ou supposé et/ou avec un profil de mouvement obtenu en tant que résultat d'un contrôle avec une autre arborescence de décision et limité par des indications temporelles, et en limitant les profils de mouvement possibles en tant que résultat du contrôle à chaque fois effectué en amont jusqu'à ce que le profil de mouvement possible soit obtenu à partir de la quantité prédéfinie de profils de mouvement.

Fig. 1

a)

Für alle ausgewählten Bewegungsfreiheitsgrade

**a1) Berechne minimale Zeit $t_{min}$**

**a2) Bewegung in Richtung $p^{trgt}$ ?**

JA — NEIN

| **a2.A)** Berechne untere Grenze $t_{d1}$ | **a2.C)** Berechne untere Grenze $t_{d1}$ |
|---|---|

$t_{d1} = \infty$ ?  JA / NEIN | $t_{d1} = \infty$ ?  JA / NEIN

| $t_{d2} = \infty$ | **a2.B)** Berechne obere Grenze $t_{d2}$ | $t_{d2} = \infty$ | **a2.B)** Berechne obere Grenze $t_{d2}$ |
|---|---|---|---|

**a3)** Bestimme minimale Synchronisationszeit $t_{sync}$

b)

Für alle ausgewählten Bewegungsfreiheitsgrade

Synchronisieren der Bewegungstrajektorien

c)

Berechnen der Führungswerte für alle ausgewählten Bewegungsfreiheitsgrade

Fig. 2

Fig. 3

PosTrapNegTrap

PosTrapNegTri

PosTriNegTri

NegTrapPosTrap

NegTrapPosTri

NegTriPosTri

PosTrapZeroNegTrap

PosTrapZeroNegTri

PosTriZeroNegTri

NegTrapZeroPosTrap

NegTrapZeroPosTri

NegTriZeroPosTri

NegLinPosTrap

NegLinPosTri

Fig. 4

Fig. 5

a)

b)

c)

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0568416 B1
- DE 10324517 A1
- DE 19914245 A1
- DE 60129009 T2

- DE 69030592 T2
- DE 69320670 T2
- DE 102005054575 B3
- DE 102006036601 A1

### In der Beschreibung aufgeführte Nicht-Patentliteratur

- **M. E. KAHN ; B. ROTH.** The Near-Minimum-Time Control of Open-Loop Articulated Kinematic Chains. *ASME Journal of Dynamic Systems, Measurement and Control,* September 1971, vol. 93, 164-172
- **M. BRADY.** Robot motion: Planing and Control. MIT Press, 1982, 221-243
- **J. E. BOBROW ; S. DUBOWSKY ; J. S. GIBSON.** Time-Optimal Control of Robotic Manipulators Along Specified Paths. *The International Journal of Robotics Research,* 1985, vol. 4 (3), 3-17
- **K. J. KYRIAKOPOULOS ; G. N. SARIDIS.** MINIMUM JERK PATH GENERATION. *Proceedings of IEEE International Conference on Robotics and Automation,* 1988, 364-369
- **S. MACFARLANE ; E. A. CROFT.** Jerk-Bounded Manipulator Trajectory Planning: Design for Real-Time Applications. *IEEE Transactions on Robotics and Automation,* Februar 2003, vol. 19 (1), 42-52

- **B. CAO ; G. I. DODDS ; G. W. IRWIN.** A Practical Approach to Near Time-Optimal Inspection-Task-Sequence Planning for Two Cooperative Industrial Robot Arms. *The International Journal of Robotics Research,* August 1998, vol. 17 (8), 858-867
- **P. LAMBRECHTS ; M. BOERLAGE ; M. STEINBUCH.** Trajectory Planning and Feedforward Design for High Performance Motion Systems. *Proceedings of the American Control Conference,* 2004, vol. 5, 4.367-4.642
- **T. KRÖGER ; A. TOMICZEK ; F. M. WAHL.** Towards On-Line Trajectory Computation. *IEEE International Conference on Intelligent Robots and Systems,* 2006, 736-741
- **B. FINKEMEYER ; T. KRÖGER ; F. M WAHL.** Executing Assembly Tasks Specified by Manipulation Primitive Nets. *Advanced Robotics VSP and Robotics Society of Japan,* Juni 2005, vol. 19 (5), 591-611